# EUROPÄISCHE PATENTSCHRIFT

(11) **EP 0 580 001 B1**
(45) Veröffentlichungstag und Bekanntmachung des Hinweises auf die Patenterteilung: **16.08.1995**
(21) Anmeldenummer: 93110662.9
(22) Anmeldetag: 03.07.1993
(51) Int. Cl.: F16B 39/14

(54) **Sicherungselement für eine auf einem Gewindebolzen aufschraubbare Schraubenmutter**
Securing element for a not to be screwed on threaded bolt
Elément de sécurité pour un écrou à visser sur un boulon fileté

(30) Priorität: 23.07.1992 DE 4224310
(43) Veröffentlichungstag der Anmeldung: 26.01.1994
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Fuss, Josef, D-5013 Elsdorf (DE)
(74) Vertreter: Messulam, Alec Moses

(56) Entgegenhaltungen:
- FR-A- 2 136 423

## Beschreibung

Die Erfindung bezieht sich auf ein Sicherungselement an einer auf einem Gewindebolzen aufschraubbaren Schraubenmutter, bestehend aus einem vorsetzbaren Ring kleinerer Dicke.

Aus der DE-PS 30 09 716 ist ein Sicherungselement für eine auf einem Gewindebolzen aufschraubbare Schraubenmutter bekannt, das aus einem vorsetzbaren Ring kleinerer Dicke besteht, der mit einer der Gewindesteigung entsprechenden Abkröpfung versehen ist und mit dem Gewinde des Gewindebolzens zusammenwirkt. Das Sicherungselement ist hierbei aus federndem Material hergestellt und kann aufgrund eines radialen Schlitzes mit einem entsprechenden Werkzeug leicht demontiert werden.

Das bekannte Sicherungselement ist verhältnismäßig einfach und billig in seiner Herstellung und benötigt benachbart der Schraubenmutter nur sehr wenig Bauraum, es ist jedoch aufgrund seiner federnden Eigenschaft nicht in der Lage sehr hoch belastete Schraubenmuttern zuverlässig gegen ein unbeabsichtigtes Lösen zu sichern.

Aus der DE-PS 36 25 148 ist ein Sicherungselement für ein auf einer Welle angeordnetes Bauteil bekannt, wobei benachbart dem Bauteil in der Welle eine Ringnut ausgebildet ist und ein Sicherungsring von ursprünglich größerem Durchmesser als der Außendurchmesser der Welle durch plastische Verformung an mehreren radialen Stellen in die Nut hinein verdrängt wird.

Dieser bekannte Sicherungsring ist ebenfalls einfach und billig in seiner Herstellung und benötigt auch wenig Bauraum benachbart dem zu sichernden Bauteil und ist auch in der Lage, höhere Axialkräfte je nach dem Grad der radialen plastischen Verformung aufzunehmen, er weist jedoch den Nachteil auf, daß die Handhabung des losen Sicherungsringes schwierig ist und bei der radialen plastischen Verformung Probleme bereiten kann.

Die Aufgabe der Erfindung ist es, ein Sicherungselement der im Oberbegriff des Patentanspruches 1 erläuterten Art derart zu verbessern, daß höher belastete Schraubenmuttern gesichert werden können und die Erfindung geht hierbei von dem Sicherungsring aus, der oben erwähnt wurde und bezweckt dessen Tragfähigkeit und Handhabbarkeit zu verbessern.

Gemäß der Erfindung wird die gestellte Aufgabe gelöst, indem ein Sicherungselement gemäß dem Oberbegriff des Patentanspruches 1 die im Kennzeichenteil des Patentanspruches 1 aufgezeigten Merkmale aufweist.

In den weiteren Ansprüchen 2 und 3 sind zweckmäßige Ausgestaltungen der Erfindung erläutert.

Dadurch, daß am Gewindebolzen in dem Bereich unmittelbar außerhalb der freien Stirnseite der aufgeschraubten Schraubenmutter eine über den Kerndurchmesser des Gewindeabschnitts hinaus nach innen dringende Ringnut vorgesehen ist, die Schraubenmutter an ihrer der Klemmseite abliegenden Stirnseite mit einer das Sicherungselement aufnehmenden kreisförmigen Ausnehmung mit einer Anzahl von radialen Einschnitten versehen ist, darin das Sicherungselement mit einem kreisförmigen Innendurchmesser von etwas größerem Durchmesser als der des Gewindebolzens und mit einem größeren Außendurchmesser mit zumindest zwei, vorzugsweise drei radialen Lappen angeordnet ist und das Sicherungselement nach dem Aufschrauben der Schraubenmutter über an den radialen Lappen angreifende Stempel einer Montage-Vorrichtung radial nach innen in die Ringnut im Gewindebolzen hinein plastisch verformbar ist, wird bei minimalem Platzbedarf für das Sicherungselement eine zuverlässige Absicherung auch höher beanspruchter Schraubenmuttern ermöglicht, da die radiale plastische Verformung über die Lappen besser kontrollierbar ausführbar ist.

Dadurch, daß das Sicherungselement in der Ausnehmung der Schraubenmutter durch Einklemmen, Verstemmen oder dergleichen unverlierbar befestigt ist, wird die Handhabung des Sicherungselementes verbessert und die radiale plastische Verformung mittels einer automatisierten Montage-Vorrichtung vereinfacht.

Dadurch, daß die radialen Lappen des Sicherungselementes mittels eines Werkzeuges aus ihren radialen Einschnitten abwinkelbar sind, ist das Sicherungselement auch bei Bedarf ohne Beschädigung der Welle demontierbar.

Die Erfindung wird anhand eines in der beiliegenden Zeichnung gezeigten Ausführungsbeispieles näher erläutert. Es zeigt:
- Fig. 1: einen vertikalen Schnitt entlang der Linie I-I in Fig. 2 durch ein Wellenbauteil mit einem aufgesetzten Nabenbauteil, der aufgeschraubten Schraubenmutter und dem erfindungsgemäßen Sicherungselement im noch unverformtem Zustand;
- Fig. 2: eine Frontansicht der Schraubenmutter mit dem unverformten Sicherungselement nach Fig. 1;
- Fig. 3: einen vertikalen Schnitt entlang der Linie III-III in Fig. 4 mit verformtem Sicherungselement und
- Fig. 4: eine Frontansicht der Schraubenmutter mit dem verformten Sicherungselement nach Fig. 3.

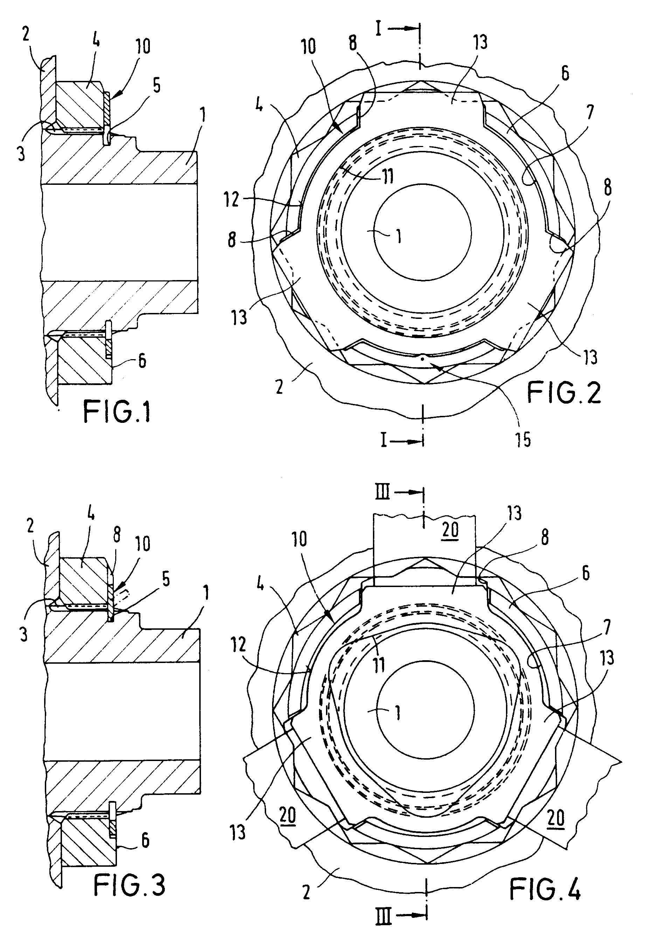

In Fig. 1 ist auf einen Wellenbauteil 1 einem Nabenbauteil 2 angeordnet. Das Wellenbauteil 1 ist hierbei mit einem Gewindeabschnitt 3 versehen, auf dem eine Schraubenmutter 4 aufgeschraubt wird. Das Wellenbauteil 1 ist unmittelbar benachbart der freien Stirnseite der Schraubenmutter 4 mit einer Ringnut 5 versehen, die sich tiefer als der Kerndurchmesser des Gewindeabschnittes 3 erstreckt.

Die Schraubenmutter 4 ist an ihrer der Klemmseite abliegenden Stirnseite 6 mit einer kreisförmigen Ausnehmung 7 und mit radialen Einschnitten 8 versehen. Ein Sicherungselement 10 weist einen kreisförmigen Innendurchmesser 11 von etwas größerem Durchmesser als der Durchmesser des Gewindeabschnittes 3 auf und ist an seinem Außenumfang 12 mit zumindest zwei, wie in der Zeichnung gezeigt, vorzugsweise mit drei radialen Lappen 13 versehen, die in den radialen Einschnitten 8 an der Stirnseite der Schraubenmutter 4 aufgenommen sind. Die Lappen 13 des Sicherungselementes 10 können in den Einschnitten 8 an der Schraubenmutter 4 durch Einklemmen oder wie bei 15 gezeigt, durch Körnerverstemmung unverlierbar mit der Schraubenmutter 4 verbunden sein, so daß bei der Montage die Schraubenmutter 4 mit dem Sicherungselement als ein Bauteil handhabbar ist.

Betrachten wir nun die Figuren 3 und 4, wo die aufgesetzte Schraubenmutter 4 mit dem Sicherungselement 10 in dem Zustand gezeigt ist, nachdem das Sicherungselement 10 über eine entsprechende Anzahl von auf die entsprechenden Lappen 13 einwirkenden Schieber oder Stempel 20 eines Montagewerkzeuges radial nach innen plastisch verformt sind.

Wie aus der gezeigten plastischen Verformung ersichtlich ist, ermöglichen es die Lappen 13 das Material des Sicherungselementes 10 weit nach innen radial zu verformen, da eine Ausweichbewegung über die kreisförmige Ausnehmung 7 an der Schraubenmutter 4 unterbunden wird.

Mit dem erfindungsgemäßen Sicherungselement für eine auf einen Gewindebolzen aufsetzbare Schraubenmutter wird so eine zuverlässige hochbelastbare Sicherung einer Schraubenmutter gegen ungewolltes Lösen erzielt.

Für den Fall, daß auch eine solche Verbindung zu Reparaturzwecken nochmal gelöst werden muß, so kann durch ein im Bereich der Einschnitte zwischen der Schraubenmutter 4 und den Lappen 13 des Sicherungselementes 10 eingebrachtes schneidenförmiges Werkzeug ein Lappen so weit axial nach vorn abgewinkelt werden, daß er mit einer entsprechenden Zange ergriffen und radial nach außen gezogen werden kann, wodurch auch die benachbarten Abschnitte des Sicherungselementes aus der kreisförmigen Ausnehmung 7 heraustreten und das Sicherungselement durch Zerstören demontiert werden kann (siehe Fig. 3 Strich-Punkt-Darstellung).

## Patentansprüche

1. Sicherungselement an einer auf einem Gewindebolzen aufschraubbaren Schraubenmutter, bestehend aus einem vorsetzbaren Ring kleinerer Dicke,
**dadurch gekennzeichnet,** daß
- am Gewindebolzen (3) in dem Bereich unmittelbar außerhalb der freien Stirnseite (6) der aufgeschraubten Schraubenmutter (4) eine über den Kerndurchmesser des Gewindeabschnittes hinaus nach innen dringende Ringnut (5) vorgesehen ist,
- die Schraubenmutter (4) an ihrer der Klemmseite abliegenden Stirnseite (6) mit einer kreisförmigen Ausnehmung (7) mit einer Anzahl von radialen Einschnitten (8) versehen ist,
- darin ein Sicherungselement (10) mit einem kreisförmigen Innendurchmesser (11) von etwas größerem Durchmesser als der das Gewindeabschnitts (3) und mit einem größeren Außendurchmesser (12) von etwas geringerem Durchmesser als der Durchmesser der kreisförmigen Ausnehmung (7) und mit einer der Anzahl der radialen Einschnitte (8) entsprechenden Anzahl von radialen Lappen (13) angeordnet ist und
- das Sicherungselement (10) nach dem Aufschrauben der Schraubenmutter (4) über an den radialen Lappen (13) angreifende Stempel (20) einer Montagevorrichtung radial nach innen und plastisch in die Ringnut (5) hinein verformbar ist.

2. Sicherungselement nach Anspruch 1,
**dadurch gekennzeichnet,** daß
- das Sicherungselement (10) in der Ausnehmung (7) der Schraubenmutter (4) durch Einklemmen, Verstemmen, Körnerverstemmen oder dergleichen unverlierbar befestigt ist und somit als eine Baueinheit mit der Mutter handhabbar ist.

3. Sicherungselement nach den Ansprüchen 1 und 2,
**dadurch gekennzeichnet,** daß
- das Sicherungselement (10) über ein zwischen einen der radialen Lappen (13) und der Schraubenmutter (4) eingeführtes schneidenförmiges Werkzeug axial aus den radialen Einschnitten (8) abwinkelbar, über eine Zange erfaßbar und in radialer Richtung unter Zerstörung demontierbar ist.

## Claims

1. A retaining element on a nut for screwing on to a bolt or threaded stud, consisting of a ring of relatively small thickness which can be placed in front of the nut,
characterised in that
- on the bolt or threaded stud (3) in the region immediately outside the free end face (6) of the screwed-on nut (4) an annular groove (5) penetrating inwardly beyond the core diameter of the threaded section is provided,
- the nut (4) is provided on its end face (6) remote from the clamping side with a circular recess (7) having a number of radial slots (8),
- wherein there is arranged a retaining element (10) having a circular internal diameter (11) of somewhat larger diameter than that of the thread section (3) and having a larger external diameter (12) of somewhat smaller diameter than the diameter of the circular recess (7) and having a number of radial tongues (13) corresponding to the number of the radial slots (8), and
- after the nut (4) has been screwed on, the retaining element (10) is plastically deformable radially inwardly into the annular groove (5) by means of dies (20) of an assembly device which engage on the radial tongues (13).

2. A retaining element in accordance with claim 1.
characterised in that
- the retaining element (10) is captively secured in the recess (7) in the nut (4) by jamming in, caulking, punch caulking or the like, so that it can be handled with the nut as a single unit.

3. A retaining element according to claim 1 or claim 2,
characterised in that
- the retaining element (10) can be bent axially outwardly from the radial slots (8) by means of a knife-shaped tool introduced between the radial tongues (13) and the nut (4), grasped by a pair of pincers and destructively disassembled in the radial direction.

## Revendications

1. Élément de sécurité disposé sur un écrou pouvant être vissé sur un boulon fileté, composé d'une bague de faible épaisseur pouvant être placée à l'avant, caractérisé en ce qu'une rainure annulaire (5) rentrante plus profonde que le diamètre de l'âme de la partie filetée est prévue sur le boulon fileté (3), dans la zone située directement à l'extérieur de la face d'extrémité libre (6) de l'écrou (4) vissé, en ce que l'écrou (4) est muni sur sa face d'extrémité (6) située à l'opposé de la face de serrage d'un évidement circulaire (7) comportant un certain nombre de découpes radiales (8), en ce qu'y est placé un élément de sécurité (10) présentant un diamètre intérieur (11) circulaire légèrement supérieur au diamètre de la partie filetée (3) et un diamètre extérieur (12) légèrement inférieur au diamètre de l'évidement circulaire (7) et comportant un nombre de languettes radiales (13) correspondant au nombre de découpes radiales (8), et en ce qu'après avoir vissé l'écrou (4), l'élément de sécurité (10) peut se déformer de façon plastique radialement vers l'intérieur en pénétrant dans la rainure annulaire (5) par le biais d'étançons (20) d'un dispositif de montage s'appliquant contre les languettes radiales (13).

2. Élément de sécurité selon la revendication 1, caractérisé en ce que l'élément de sécurité (10) est fixé dans l'évidement (7) de l'écrou (4) par coinçage, matage, matage au poinçon ou analogues de manière à ne pas le perdre et peut ainsi être manipulé en formant une seule unité de construction avec l'écrou.

3. Élément de sécurité selon les revendications 1 et 2, caractérisé en ce que l'élément de sécurité (10) peut être recourbé hors des découpes radiales (8) au moyen d'un outil en forme de lame introduit entre les languettes radiales (13) et l'écrou (4), saisi par une pince et démonté dans la direction radiale en le cassant.
